# FASCICULE DE BREVET EUROPEEN

(11) **EP 1 567 906 B1**
(45) Date de publication et mention de la délivrance du brevet: **14.02.2007**
(21) Numéro de dépôt: 03782532.0
(22) Date de dépôt: 07.11.2003
(51) Int. Cl.: G02C 7/02, G02B 1/10

(54) **PROCEDE D OBTENTION D UN MARQUAGE SUR UNE LENTILLE OPHTALMIQUE A BASSE ENERGIE DE SURFACE**
VERFAHREN ZUR HERSTELLUNG EINER MARKIERUNG AUF EINER OPHTALMISCHEN LINSE NIEDRIGER OBERFLÄCHENENERGIE
METHOD FOR OBTAINING A MARK ON A LOW SURFACE ENERGY OPHTHALMIC LENS

(30) Priorité: 15.11.2002 FR 0214356
(43) Date de publication de la demande: 31.08.2005
(73) Titulaire: ESSILOR INTERNATIONAL (Compagnie Générale d'Optique), F-94220 Charenton-le-Pont (FR)
(72) Inventeur: CONTE, Dominique, F-52100 SAINT-DIZIER (FR); KELLER, Gerhard, F-94100 ST Maur des Fosses (FR); WILLEMIN, Gérard, F-94500 Champigny Sur Marne (FR)
(74) Mandataire: Lewitter, Herbert
(86) Numéro de dépôt international: PCT/FR2003/003334
(87) Numéro de publication internationale: WO 2004/046791

(56) Documents cités:
- EP-A- 0 528 540
- EP-A- 0 614 957
- US-A- 3 657 085
- US-A- 4 145 125
- US-B1- 6 238 847
- US-B1- 6 281 468

## Description

La présente invention concerne le marquage de verres ophtalmiques et notamment de verres de lunettes, pour identifier l'origine, le fabricant et/ou ses caractéristiques techniques, ainsi que des signes distinctifs tels qu'un logo. De tels marquages sont connus sous la dénomination de "monogramme". Il existe de nombreux procédés de marquage de verres ophtalmiques, dont certains impliquent l'enlèvement de la matière de la lentille ophtalmique et/ou ses revêtements, notamment par la gravure ou au moyen de lasers, et notamment lasers excimers.

Les lentilles ophtalmiques de dernière génération comportent le plus souvent un revêtement de surface hydrophobe et/ou oléophobe antisalissures associé à un revêtement anti-reflets. Le revêtement anti-reflets, qui peut être mono ou multi couches, est constitué par un matériau à énergie de surface élevée. Sur ce revêtement anti-reflets est déposée une fine couche protectrice constituée par un matériau organique à basse énergie de surface. Cette fine couche diminue les dépôts graisseux et autres salissures et constitue en pratique un revêtement de surface hydrophobe et/ou oléophobe.

De tels marquages sont de préférence normalement invisibles afin de ne pas gêner le porteur. Ils sont rendus visibles par embuage, la fine pellicule de condensation qui se forme sur la surface produisant des micro-gouttelettes sur les portions à basse énergie de surface, alors que sur des portions à haute énergie de surface, la pellicule de condensation se répartit sur toute la surface en formant des gouttelettes de taille supérieure. Sous un éclairage ambiant, la diffusion des micro-gouttelettes produit un ton beaucoup plus clair que celui des gouttelettes de taille supérieure.

La publication WO 01/68384, au nom du déposant, décrit un procédé et appareil pour le marquage de lentilles ophtalmiques à basse énergie de surface qui met en oeuvre une décharge d'énergisation qui augmente sélectivement l'énergie de surface correspondant aux découpes d'un masque placé entre celle-ci et la lentille ophtalmique à marquer. Un tel masque comprend une feuille souple appliquée sous tension mécanique contre la surface à marquer ou une couche d'encre appliquée à ladite surface et enlevée ultérieurement avec un solvant approprié. Selon une forme de réalisation préférée, la décharge d'énergisation est une source dé décharge corona.

Selon le procédé décrit dans la demande PCT WO 01/68384, la décharge d'énergisation produit une réaction chimique avec le seul revêtement anti-salissures rompant les liaisons moléculaires détruisant ainsi l'intégrité du revêtement anti-salissures révélant ainsi la surface à énergie plus élevée du revêtement anti-reflets sous-jacent. Le marquage qui en résulte est parfaitement visible par embuage.

Ce procédé est efficace et donne de bons résultats.

Après les traitements de surface, le verre ophtalmique subit une opération de débordage ou détourage qui consiste à usiner la tranche ou périphérie du verre pour le conformer aux dimensions du cercle de la monture à laquelle il est destiné.

Le débordage est réalisé normalement sur une meuleuse. Lors de cette opération, le verre est maintenu par des organes de blocage agissant axialement. Le mouvement relatif du verre par rapport à la meule est contrôlé numériquement afin d'obtenir le contour périphérique désiré. Ces organes de blocage doivent assurer ie maintien du verre lors du débordage.

Pour le glantage, on positionne un dispositif de maintien, ou gland, sur la face convexe du verre, un patin de maintien, tel qu'une pastille adhésive double face, étant disposé entre le moyen de maintien, ou gland, et la face convexe du verre. Un second organe de blocage axial serre la face concave du verre par l'intermédiaire d'une butée normalement en élastomère.

Lors du débordage, la coupe tangentielle peut générer une rotation du verre par rapport aux organes de blocage et partant le rejet du verre ainsi débordé, si ces derniers ne sont pas suffisamment efficaces. Le bon maintien du verre dépend principalement de la bonne adhérence de l'interface patin de maintien/face convexe du verre.

Or, les revêtements de surface hydrophobes et/ou oléophobes anti-salissures, plus habituellement du type fluorosilane, ont atteint une telle efficacité que l'adhérence à l'interface patin/face convexe du verre s'en trouve altérée, voire compromise. C'est en particulier le cas pour des verres en polycarbonate dont le débordage génère des efforts beaucoup plus importants que ceux nécessaires pour d'autres matériaux. Il en résulte un pourcentage élevé de rejet de verres pour lesquels l'opération de débordage n'a pas pu être effectuée correctement.

Afin de surmonter ce problème, il a été proposé de déposer sur le revêtement anti-salissures une couche d'adhérence conférant au verre une énergie de surface supérieure à celle de la couche externe, à savoir celle du revêtement anti-salissures. Cette couche de protection temporaire peut être appliquée sur la totalité de la face convexe du verre ou uniquement la zone centrale destinée à recevoir le patin de maintien. Grâce à la couche de protection temporaire, le désaxage maximum constaté est de 2°, voire égal ou inférieur à 1°.

Cette couche protectrice est constituée de tous matériaux permettant d'accroître une énergie de surface et susceptibles d'être éliminés après le débordage sans modifier les propriétés optiques du verre et ses qualités de la face concernée. De préférence, cette couche protectrice temporaire est une couche minérale et plus particulièrement du fluorure ou un mélange de fluorures métalliques, un oxyde ou un mélange d'oxydes métalliques, tels que par exemple le fluorure de magnésium (MgF₂), de lanthane (LaF₃), d'aluminium (AlF₃) ou de cérium (CeF₃). Des mélanges d'alumine et d'oxyde praséodyme sont recommandés. Une telle couche protectrice peut être déposée par tout procédé classique mais de préférence est déposée par évaporation dans des enceintes à vide, comme c'est en général le cas pour le revêtement anti-reflets, ainsi que pour le revêtement anti-salissures hydrophobe et/ou oléophobe.

L'épaisseur de la couche protectrice temporaire est de préférence comprise entre 5 et 50 nm. Si l'épaisseur de la couche protectrice est trop faible, la modification de l'énergie de surface qui en résulte risque d'être insuffisante, alors que si cette épaisseur est trop élevée, il y a un risque de faire apparaître des contraintes mécaniques au sein de la couche, éventuellement préjudiciables aux propriétés attendues.

Enfin, cette couche protectrice temporaire présente de préférence un degré minimum de transparence, par exemple au moins 18 %, voire au moins 40 %, selon la norme ISO 8980/3, permettant d'effectuer sur le verre portant sa couche protectrice des mesures classiques de puissance par frontofocomètre.

Selon une variante, des encres classiques pour le marquage de verres ophtalmiques peuvent être utilisées et/ou des résines constituant le liant de telles encres. Avec des couches protectrices organiques, des épaisseurs beaucoup plus élevées peuvent être obtenues, allant de 5 à 150 µm. Des résines de type alkyde donnent satisfaction.

Par ailleurs, les revêtements anti-reflets, ainsi que, les revêtements hydrophobes/oléophobes sont en général déposés par évaporation, dans des cloches à vide. Les verres, sur lesquels les revêtements anti-reflets et anti-salissures doivent être déposés, sont placés au-dessus des orifices d'un carrousel dans l'enceinte à vide et reposent à la périphérie sur une bague annulaire solidaire du carrousel par des moyens de blocage. Le dispositif de traitement est situé dans la partie inférieure de l'enceinte et comprend un creuset dans lequel est placé le matériau à évaporer qui est chauffé généralement au moyen d'un faisceau d'électrons ou une simple source à effet Joule, selon la nature du matériau à évaporer.

Le matériau à évaporer pour constituer une couche de revêtement est déposé sur la face du verre à traiter jusqu'à obtention de l'épaisseur souhaitée, puis l'évaporation de ce premier matériau est stoppée. On procède alors à l'évaporation du matériau suivant. Généralement, on dépose l'ensemble des revêtements sur l'une des faces du verre. Puis, après retournement du verre, on dépose sur l'autre face du verre l'ensemble des revêtements, qui est normalement identique à celui déposé sur la première face du verre.

Il va de soi que lors du traitement de la seconde face, il faut préserver l'intégrité des couches déposées sur la première face et plus particulièrement la couche extérieure de celle-ci. En effet, la couche de revêtement anti-salissures hydrophobe et/ou oléophobe présente des épaisseurs très faibles, de 2 à 10 nm, voire 2 à 5 nm. Or, il est parfois nécessaire de soumettre la face du verre à des traitements mettant en oeuvre des espèces très énergétiques, c'est-à-dire des espèces dont les énergies sont supérieures à 0,1 eV ou des espèces réactives, c'est-à-dire des espèces susceptibles de réagir chimiquement avec la surface du verre. En particulier, avant le dépôt des revêtements multi-couches anti-reflets, le verre ophtalmique fait l'objet d'une préparation de surface, telle qu'un bombardement ionique (par exemple avec des gaz rares, de l'oxygène, leurs mélanges, de l'azote ou de l'air), un traitement par plasma ou un traitement par effluvage (typiquement traitement par plasma d'oxygène à une pression de 10-2 mbars). Il peut également être nécessaire d'effectuer un traitement d'activation afin de préparer une surface avant le dépôt d'une couche de revêtement, par exemple pour augmenter l'adhérence de la couche. De même, on peut appliquer un bombardement ionique lors de l'évaporation des matériaux (appelé dépôt par assistance ionique ou IAD) pour améliorer ses propriétés mécaniques et particulièrement pour densifier la couche.

Les espèces générées sont hautement énergétiques et/ou réactives et sont susceptibles d'altérer le dépôt effectué sur la première face du verre et notamment ceux situés sur la partie périphérique du carrousel. Le même problème est également constaté lorsque les verres à traiter ont une forme globalement proche du verre prêt au montage en fonction de la monture, les espèces énergétiques et/ou réactives pouvant alors passer entre l'orifice circulaire du carrousel et le bord périphérique du verre pour atteindre le dépôt effectué sur la première face.

Pour surmonter ce problème, il a également été envisagé de déposer sur la fine couche extérieure anti-salissures, c'est-à-dire la couche externe du verre, une couche protectrice temporaire afin de protéger la couche extérieure de la première face du verre lors du dépôt des couches de revêtement sur la seconde face dans une enceinte à vide.

Cette couche protectrice temporaire doit avoir une épaisseur suffisante pour éviter l'altération des propriétés de la couche fine extérieure et être choisie en fonction de l'énergie des espèces qui peut varier de 40 à 150 eV avec une densité de courant au niveau de la surface du verre de 30 à 700 µA/cm2. L'épaisseur de la couche protectrice, pour cette application, est de préférence comprise entre 5 nm et 10 µm. Lorsque la couche protectrice est une couche minérale déposée par évaporation, son épaisseur est de préférence comprise entre 5 et 200 nm. En tout cas, l'épaisseur de la couche protectrice ne doit pas être trop faible, au risque de ne pas suffisamment protéger la fine couche extérieure hydrophobe et/ou oléophobe ni trop élevée, en particulier pour les couches protectrices essentiellement minérales, au risque de faire apparaître des contraintes mécaniques au sein de la couche, préjudiciables à ces propriétés.

La couche utilisée à cette fin peut avoir la même composition que la couche d'adhérence citée ci-dessus. Les mélanges d'alumine et d'oxyde praséodyme sont également recommandés à cette fin.

Quant aux couches protectrices temporaires en matière organique, on peut citer celles à base de polytétrafluoréthylène (PTFE), par exemple celui commercialisé sous la marque TEFLON®.

On peut également envisager un revêtement protecteur temporaire multi-couches et en particulier bi-couches, la première couche étant de nature minérale, de faible épaisseur (5 à 200 nm) alors que la seconde couche de nature organique peut être obtenue par dépôt et durcissement d'un latex. Cette couche a une épaisseur plus importante, de 0,2 à 10 µm.

La couche organique constitue une bonne protection mécanique et peut être facilement éliminée par pelage. La couche de nature organique est choisie de manière que l'adhérence avec la première couche minérale soit plus élevée que celle avec l'interface entre la première couche de nature minérale et la couche hydrophobe et/ou oléophobe. Ainsi, lors du pelage, la couche minérale est également éliminée.

Or, le dépôt d'une couche protectrice temporaire pour assurer une bonne adhérence entre un patin et la face convexe du verre et/ou pour assurer la protection de la première face du verre lors du traitement avec des espèces hautement énergétiques ou réactives, constitue un écran, ou masque, aux sources de décharges corona qui empêche celles-ci d'atteindre la fine couche de basse énergie de surface à travers la couche protectrice temporaire pour l'une ou l'autre des applications précitées.

Il était donc nécessaire d'effectuer le traitement corona avant le dépôt de la couche protectrice temporaire, ce qui impliquait le transfert du verre de l'enceinte à vide au dispositif de traitement par corona et ensuite le retour à l'enceinte à vide pour déposer la couche protectrice temporaire.

Or, il a été constaté de manière inattendue que le traitement corona peut être effectué sur la couche fine hydrophobe et/ou oléophobe à travers la couche protectrice temporaire à condition que son épaisseur soit inférieure à 5nm environ, c'est-à-dire une épaisseur qui a été considérée jusqu'ici comme insuffisante pour l'une ou l'autre des applications précitées. Il s'avère que malgré cette épaisseur très réduite de la couche protectrice temporaire, celle-ci offre une fonction adéquate pour l'une et l'autre des applications précitées.

Un aspect de la présente invention est donc un procédé pour le marquage sur une face dun verre ophtalmique du type comportant une couche extérieure hydrophobe et/ou oléophobe à basse énergie de surface sur un substrat ou un revêtement à haute énergie de surface, un masque dont la configuration est complémentaire du marquage désiré est positionné entre une face du verre sur laquelle le marquage sera effectué et une source de décharge énergisante apte à oxyder la couche extérieure pour révéler le substrat ou revêtement à haute énergie sous-jacent, caractérisé en ce qu'on dépose sur ladite couche extérieure, une couche protectrice temporaire ayant une énergie de surface supérieure à celle de la couche extérieure et une épaisseur inférieure à environ 5 nm afin de permettre à la décharge d'agir sur la couche extérieure à travers la couche protectrice temporaire.

De préférence, la couche protectrice est en matière minérale déposée par évaporation et comprend, par exemple, un fluorure ou un mélange de fluorures métalliques, tels que MgF₂, LaF₂, AlF₃, ou CeF₃ ou un oxyde ou un mélange d'oxydes métalliques, tels que TiO₂, AL₂O₃, ZrO₂ et l'oxyde de praséodyme et le mélange d'oxydes métalliques est un mélange d'alumine et d'oxyde praséodyme.

La couche protectrice temporaire peut avoir une structure sensiblement continue ou discontinue, notamment sous forme d'une trame.

Selon une autre forme de réalisation, la couche protectrice temporaire est en matière organique, et de préférence à base de polytétrafluorure d'éthylène.

En variante, la couche protectrice est constituée d'une encre de marquage pour verre ophtalmique et/ou d'un polymère constituant un liant d'encre de marquage.

La couche protectrice temporaire est éliminée de préférence après débordage du verre, notamment par une solution acide, essuyée à sec ou par application d'ultrasons.

En pratique, le dépôt de la couche extérieure hydrophobe et/ou oléophobe sur une première face du verre est précédé par le dépôt d'une ou plusieurs couches minérales ou organiques, et on effectue au moins une étape de traitement par des espèces énergétiques et/ou réactives capables d'attaquer et/ou de modifier chimiquement la surface de la première face du verre avant le dépôt de la (ou des) couche(s) minérale(s) ou organique(s). Le Verre peut alors être retourné sur son emplacement dans le carrousel pour effectuer un traitement par espèces énergétiques et/ou réactives sur la seconde face de celui-ci avant d'effectuer le dépôt d'une ou plusieurs couches minérales ou organiques et ensuite une couche extérieure hydrophobe et/ou oléophobe. On peut alors déposer une couche protectrice temporaire sur la couche extérieure hydrophobe et/ou oléophobe sur la secondeface du verre afin d'améliorer son adhérence avec l'organe de blocage qui coopère avec cette seconde face lors du débordage.

Le marquage proprement dit est effectué selon le procédé décrit dans la demande PCT WO 01/68384. Bien que la source de décharge corona soit préférée comme source énergisante pour sélectivement oxyder la couche extérieure hydrophobe et/ou oléophobe, d'autres sources peuvent être adoptées, telles qu'une source de plasma froid ou de rayonnement ultraviolet pour la photo-oxydation des molécules de la couche extérieure hydrophobe et/ou oléophobe.

L'invention sera décrite en référence aux dessins annexés, sur lesquels :
- la figure 1 est une vue schématique d'un appareil de traitement corona à basse fréquence pour le marquage d'un verre ; et
- la figure 2 est une vue partielle schématique d'un verre selon l'invention après traitement corona à travers une couche temporaire de protection.

Le verre traité selon la présente invention comprend un substrat en verre minéral ou organique. Les deux faces du verre comportent différentes couches certaines d'entre elles étant déposées les unes sur les autres, par évaporation de matériaux contenus dans un creuset, avec un canon à électrons ou par effet Joule,dans une enceinte à vide. On peut notamment citer la machine Balzers BAK 760 équipée d'un canon à électrons, d'un canon à ions du type end-Hall, Mark 2 Commonwealth et d'une source d'évaporation à effet Joule, ou encore la machine de traitement sous vide Leybold 1104, équipée d'un canon à électrons et d'une source d'évaporation à effet Joule. Avant le dépôt d'une première couche sur une première face, qui sera de préférence la face convexe, celle-ci est traitée par les espèces énergétiques et/ou réactives notamment par bombardement ionique, par exemple avec un faisceau d'ions argon et oxygène à l'aide du canon à ions, ou traitement par plasma pour obtenir une modification chimique de la surface afin d'améliorer l'adhérence des dépôts.

Habituellement, le premier revêtement comprend une couche anti-abrasion, notamment du type polysiloxane correspondant à l'exemple 3 de la demande de brevet européen N° 0.614.957, qui protège le substrat des rayures, notamment lorsqu'il s'agit de substrat organique en polycarbonate et qui présente une haute énergie de surface.

Sur ce premier revêtement est ensuite déposé un revêtement anti-reflets mono-couche ou multi-couches présentant une énergie de surface élevée. Un tel revêtement est de préférence multi-couches dont les couches sont successivement à haut ou bas indice de réfraction et peut, par exemple, comprendre une première couche de ZrO₂, une deuxième couche de SiO₂, une troisième de couche de ZrO₂, et enfin une quatrième couche de SiO₂. Un tel revêtement est relativement insensible aux décharges énergisantes, telles que décharges corona, plasma froid ou irradiation ultra-violets. De ce fait, le marquage mettant en oeuvre de telles décharges énergisantes laissera sensiblement intactes les couches de revêtement anti-reflets et notamment la couche extérieure. Il va de soi que d'autres revêtements anti-reflets peuvent être adoptés et notamment ceux constitués d'une pluralité de couches minérales. De même, d'autres procédés de dépôt des couches du revêtement anti-reflets peuvent être mis en oeuvre et notamment la pulvérisation cathodique ou des procédés de réaction chimique en phase vapeur assistés par plasma.

Sur le revêtement anti-reflets est ensuite déposée la couche de revêtement externe hydrophobe et/ou oléophobe par évaporation dans un creuset à effet Joule d'un composé comprenant des motifs perfluoropropylène commercialisé par la société Daikin, sous la marque Optool DSX. L'épaisseur d'un tel revêtement hydrophobe et oléophobe est inférieure à 10 nm, voire 5 nm, et de préférence est de 2 nm. Son énergie de surface est inférieure à 14 millijoules/m² et de préférence égale ou inférieure à 12 millijoules/m².

Selon l'invention, une couche protectrice temporaire d'une épaisseur inférieure à environ 5 nm est déposée, également par évaporation, et de préférence dans la même enceinte à vide, sur le revêtement hydrophobe et/ou oléophobe sur la totalité de la face traitée pour la protéger pendant le traitement de l'autre face du verre ou éventuellement sur une zone destinée à entrer en contact avec le patin de maintien, notamment dans le cas où la face convexe est traitée dans l'enceinte à vide après la face concave et où, par conséquent, la protection vis-à-vis des espèces énergétiques et/ou réactives n'est pas indispensable.

La couche protectrice temporaire est par exemple une couche minérale, constituée d'un fluorure ou d'un mélange de fluorures métalliques, d'un oxyde ou un mélange d'oxydes métalliques. De préférence, on utilise du MgF₂ dont la taille moyenne des particules est de 2,5 mm, commercialisé par la société Merck, qui est chargé dans le creuset puis évaporé par le canon à électrons. La vitesse de dépôt est d'environ 0,50 nm/seconde et la durée de 4 à 8 secondes, de sorte que l'épaisseur de la couche protectrice temporaire soit d'environ de 2 à 4 nm. L'épaisseur déposée est contrôlée par une micro-balance à quartz.

Après le dépôt de la couche protectrice temporaire, on procède au réchauffage de l'enceinte et remise à l'atmosphère de la chambre de traitement avant de retourner les verres. L'ensemble des étapes de traitement déjà décrites est alors reconduit sur la seconde face du verre. La couche protectrice temporaire, de préférence de MgF₂, déposée sur la face convexe aurait pour but d'augmenter l'énergie de surface de celle-ci afin d'améliorer l'adhérence lors du débordage.

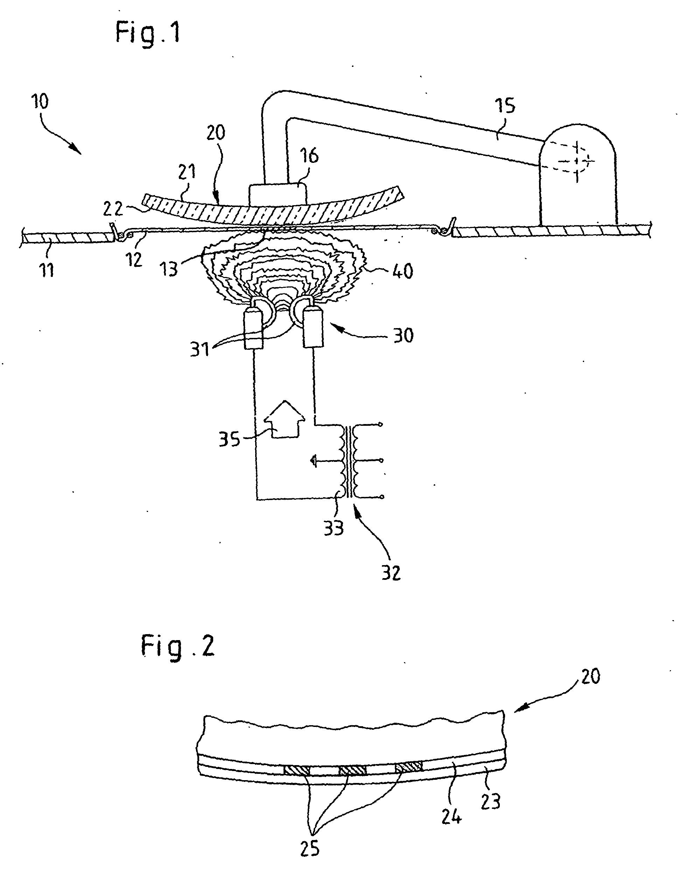

Après le dépôt des couches de revêtement sur les deux faces du verre, le verre est sorti de l'enceinte pour son marquage dans un appareil de traitement corona à basse fréquence. Cet appareil 10, illustré schématiquement sur la figure 1, comporte un écran ou masque 12 en Mylar® tendu par un mécanisme de tension Mylar®. Cet écran comporte une découpe complémentaire 13 du motif qui sera marqué sur le verre 20. Le verre 20 est maintenu par un bras pivotant 15 (représenté dans une position à 90° de sa position normale pour simplifier la vue) et sollicité vers une position de prise de son patin 16 avec le centre de la face concave 21 du verre, de sorte que la zone correspondante de la face convexe 22 soit en contact intime et continu avec la portion de l'écran comportant la découpe de marquage.

Le dispositif de décharge corona 30 commercialisé par la société Softal-3DT sous la marque MultiDyne est monté sous l'écran à l'intérieur d'un boîtier dont seule la plaque supérieure 11 est représentée. Il comprend deux électrodes 31 en fil en forme de crochet ou en forme de D, avec une portion rectiligne suivie d'une portion semi-circulaire. Les portions semi-circulaires sont disposées en vis-à-vis. La distance entre les électrodes et le verre à traiter est d'environ 5 mm. Cette disposition permet de traiter une zone ovale dont l'axe majeur peut aller jusqu'à 65 mm. Ces électrodes sont connectées aux enroulements secondaires 33 d'un transformateur 32 à haute tension de 12 kV. Pour des raisons de sécurité, les enroulements secondaires ont une mise à la terre au centre qui diminue la tension de 50 % entre les conducteurs à haute tension et la terre. Une source d'air sous pression 35, de préférence un ventilateur, à débit constant est dirigée entre les électrodes. Ce débit d'air a pour effet de dévier l'arc électrique 40 et de l'étaler suivant une courbure déterminée par la configuration des électrodes. Plus la tension et la vitesse de l'air sont élevées, plus l'arc peut s'étaler. Des arcs sont produits à un rythme constant de 50 à 60 cycles/seconde, pour une durée de 5 secondes. L'arc continu produit une décharge corona à ions très chargés. Ce champ d'énergie est capable de désintégrer la fine épaisseur du revêtement hydrophobe et/ou oléophobe en regard des découpes 13 dans l'écran 12 à travers la couche protectrice dont l'épaisseur est inférieure à environ 5 nm et de préférence entre environ 2 et 4 nm, et plus préferentiellement d'environ 2 nm déposée sur ie revêtement. Le dispositif comporte des moyens (non illustrés) pour réguler le débit d'air au débit désiré. Il peut comporter en outre un système de filtration et d'extraction d'ozone produite dans le traitement corona qui transforme l'ozone en oxygène et le gaz ainsi filtré s'échappe sous le boîtier.

La figure 2 représente une vue schématique partielle à plus grande échelle d'une partie de la couche protectrice temporaire 23 de la face convexe 22, la couche hydrophobe et/ou oléophobe 24 sur laquelle la couche protectrice temporaire est déposée et comportant des zones désintégrées 25 par la source de décharge énergisante, de sorte que soit exposée la surface de la couche extérieure du revêtement anti-reflets présentant une haute énergie de surface. Le verre est ensuite débordé pour l'adapter au cercle de la monture. Ce débordage, par exemple celui d'un verre peut être réalisé sur une meuleuse Gamma de la société Essilor, le verre étant maintenu entre un patin de maintien en l'occurrence une pastille auto-adhésive de la société 3M de 25 mm de diamètre qui coopère avec la face convexe et un gland de la société Essilor, de même diamètre. Le désaxage constaté lors du débordage est inférieur à 1°, et par conséquent est parfaitement satisfaisant.

La couche protectrice temporaire peut être ensuite éliminée par essuyage à sec au moyen d'un chiffon de coton ou en milieu liquide. De préférence, elle est éliminée en milieu liquide par une solution acide, en particulier une solution d'acide orthophosphorique à des molarités entre 0,01 et 1 N. Cette solution peut également comprendre des agents tensio-actifs anioniques, cationiques ou amphotères. Le verre est plongé dans la cuve à ultrasons dans la solution d'acide orthophosphorique à température ambiante pendant une durée de 2 minutes puis rincé à l'eau ou à l'alcool isopropylique puis essuyé. La température de cette solution peut varier, la température ambiante étant satisfaisante. On peut même combiner ces deux moyens d'essuyage, suivis par une étape de nettoyage par une solution aqueuse de pH sensiblement égal à 7. Cette couche peut également être éliminée par ultrasons dans une cuve à ultrasons B2200 E2 de la société Branson ayant une puissance de 60 W.

### Exemple 1

On dépose un premier revêtement comprenant une couche d'anti-abrasion du type polysiloxane correspondant à l'exemple 3 de la demande de brevet européen N° 0.614.957 et ensuite un revêtement anti-reflets comprenant une succession de quatre couches ZrO₂, SiO₂, ZrO₂, SiO₂ et ensuite une couche de revêtement d'un fluorosilazane référence KP801M commercialisé par la société Shinetsu. Ce verre est ensuite traité pour monogrammage avec le dispositif de décharge corona, tel que décrit ci-dessus, pour une durée de 5 secondes.

### Exemple 2

On dépose un premier revêtement comprenant une couche d'anti-abrasion du type polysiloxane correspondant à l'exemple 3 de la demande de brevet européen N° 0.614.957 et ensuite un revêtement anti-reflets comprenant une succession de quatre couches ZrO₂, SiO₂, ZrO₂, SiO₂ et ensuite une couche de revêtement d'un composé comprenant des motifs perfluoropropylène de la marque Optool DSX, commercialisé par la société Daikin. Il est ensuite traité pour monogrammage comme dans l'exemple 1.

### Exemple 3

On dépose sur un autre verre préparé selon l'exemple 1 une couche protectrice temporaire de MgF₂ d'une épaisseur de 20 nm. Il est ensuite traité pour monogrammage comme dans l'exemple 1 mais pendant une durée de 10 secondes. La couche protectrice temporaire est ensuite éliminée par essuyage à l'aide d'un chiffon de polissage Selvyt®.

### Exemple 4

On procède selon l'exemple 3 avec le traitement pour monogrammage pour cinq périodes d'une durée de 10 secondes, c'est-à-dire un total de 50 secondes.

### Exemple 5

On dépose sur un autre verre préparé selon l'exemple 2 une couche protectrice temporaire de MgF₂ d'une épaisseur de 20 nm. Il est ensuite traité pour monogrammage comme dans l'exemple 1, mais pendant une durée de 10 secondes, puis la couche de protection temporaire est éliminée par essuyage à l'aide d'un chiffon de polissage Selvyt®.

### Exemple 6

On procède selon l'exemple 5 avec le traitement pour monogrammage pour cinq périodes d'une durée de 10 secondes, c'est-à-dire un total de 50 secondes.

### Exemple 7

On dépose sur encore un autre verre préparé selon l'exemple 1 une couche protectrice temporaire de MgF₂ d'une épaisseur de 2 nm. Il est ensuite traité pour monogrammage comme dans l'exemple 1, puis la couche de protection temporaire est éliminée par essuyage à l'aide d'un chiffon de polissage Selvyt®.

### Exemple 8

On dépose sur encore un autre verre préparé selon l'exemple 2 une couche protectrice temporaire de MgF₂ d'une épaisseur de 2 nm. Il est ensuite traité pour monogrammage comme dans l'exemple 1, puis la couche de protection temporaire est éliminée par essuyage à l'aide d'un chiffon de polissage Selvyt®.

Ensuite, l'ensemble des verres ainsi traités sont embués à froid afin de faire ressortir le motif monogrammé. Le monogrammage sur les verres selon les exemples 1 et 2 est bon. Les zones à haute énergie de surface complémentaires correspondant aux découpes de l'écran sont recouvertes d'une pellicule de condensation comprenant des gouttelettes de grande taille et de ton foncé sous l'éclairage ambiant, alors que sur les zones protégées par l'écran, à basse énergie de surface, la pellicule de condensation est constituée de micro-gouttelettes d'un ton beaucoup plus clair.

Avec l'embuage des verres selon les exemples 7 et 8, on obtient la même bonne qualité des motifs de condensation qu'avec les verres selon les exemples 1 et 2. En outre, les qualités optiques et physiques du revêtement extérieur, c'est-à-dire le revêtement anti-salissures hydrophobe et/ou oléophobe du verre, après l'élimination de la couche protectrice temporaire selon les exemples 7 et 8 sont quasiment identiques à celles du verre avant le dépôt de cette couche protectrice temporaire des verres selon les exemples 1 et 2.

En revanche, l'embuage des verres des exemples 3 et 5 ne permet pas de faire ressortir des motifs de condensation complémentaires des découpes de l'écran. De même, avec les exemples 4 et 6, l'embuage dans les zones complémentaires des découpes de l'écran, il existe des micro-gouttelettes de taile supérieure à celles présentes dans les zones protégées par l'écran mais le contraste entre ces zones est très faible et donc le monogrammage est de qualité médiocre.

Selon la forme de réalisation décrite, la source de décharge énergisante est une source de décharge corona. D'autres sources de décharge énergisantes peuvent être utilisées, telles que, par exemple, une source à plasma froid ou une source de radiation ultraviolette.

Une source à plasma froid peut comprendre une décharge électrique ou à micro-ondes ou une source de décharge luminescente. Une source électrique ou à micro-ondes peut produire une décharge dans un gaz tel que l'oxygène, l'argon, l'azote, le tétrafluorure de carbone, l'hélium, l'ammonium à des pressions réduites de l'ordre d'un millibar. La durée de la décharge peut varier entre plusieurs secondes à plusieurs dizaines de secondes et de préférence sera de l'ordre de plusieurs secondes. Une source de décharge à plasma froid est fabriquée par Atea et vendue sous la marque Matis. Il est également possible d'utiliser une source de décharge à plasma froid à pression atmosphérique Lectro Treat qui produit une décharge corona hybride.

Une source de radiation ultraviolette produira une photo-oxydation des molécules à la surface irradiée. La dissociation moléculaire est obtenue avec des longueurs d'ondes de l'ordre de 2357A° et 1849A°. Une unité Uvocs de décontamination des surfaces peut être employée comme source de radiation ultraviolette pour la présente invention.

De même, au lieu de l'écran décrit dans la forme de réalisation préférée, on peut mettre en oeuvre une autre forme de masque, par exemple une couche d'encre appliquée directement à la surface à marquer, tel que décrit dans la publication WO 01/68384 précitée.

De telles autres décharges énergisantes sont également susceptibles de faire désintégrer sélectivement la couche hydrophobe et/ou oléophobe, notamment par oxydation ou destruction des liaisons covalentes.

Bien entendu, de nombreuses modifications peuvent être apportées aux exemples de réalisation décrits ci-dessus sans sortir du cadre de l'invention.

## Revendications

1. Procédé pour le marquage sur une face de verre ophtalmique du type comportant une couche extérieure hydrophobe et/ou oléophobe à basse énergie de surface sur un substrat ou un revêtement à haute énergie de surface, dans lequel un masque de configuration complémentaire du marquage désiré est positionné entre la face du verre à marquer et une source de décharge énergisante apte à éliminer sensiblement la couche extérieure afin de révéler le substrat ou revêtement à haute énergie sous-jacent, **caractérisé en ce qu'**on dépose sur ladite couche extérieure, une couche protectrice temporaire ayant une énergie de surface supérieure à celle de la couche extérieure et une épaisseur inférieure à environ 5 nm afin de permettre à la décharge d'agir sur la couche extérieure à travers la couche protectrice temporaire.

2. Procédé selon la revendication 1, **caractérisé en ce que** l'épaisseur de la couche protectrice temporaire est entre environ 2 et 4 nm.

3. Procédé selon la revendication 1 ou 2, **caractérisé en ce que** la couche protectrice est une couche minérale.

4. Procédé selon la revendication 1 ou 2, **caractérisé en ce que** la couche protectrice comprend un fluorure ou un mélange de fluorures métalliques ou un oxyde ou un mélange d'oxydes métalliques.

5. Procédé selon la revendication 4, **caractérisé en ce que** le fluorure métallique est MgF₂, LaF₂, AlF₃, ou CeF₃.

6. Procédé selon la revendication 4, **caractérisé en ce que** l'oxyde est choisi parmi TiO₂, AL₂O₃, ZrO₂ et l'oxyde de praséodyme et le mélange d'oxydes métalliques est un mélange d'alumine et d'oxyde praséodyme.

7. Procédé selon l'une quelconque des revendications précédentes, **caractérisé en ce que** la couche protectrice est déposée par évaporation.

8. Procédé selon l'une quelconque des revendications précédentes, **caractérisé en ce que** la couche protectrice temporaire est déposée sur une zone de la face destinée à être en contact avec un patin de maintien du verre lors de son débordage.

9. Procédé selon l'une quelconque des revendications précédentes, **caractérisé en ce que** la couche présente une structure sensiblement continue.

10. Procédé selon l'une quelconque des revendications précédentes, **caractérisé en ce que** la couche protectrice présente une structure discontinue.

11. Procédé selon l'une quelconque des revendications précédentes, **caractérisé en ce que** la couche protectrice se présente sous la forme d'une trame.

12. Procédé selon l'une quelconque des revendications précédentes, **caractérisé en ce que** la couche protectrice temporaire est un polytétrafluorure d'éthylène.

13. Procédé selon la revendication 1, **caractérisé en ce que** la couche protectrice est constituée d'une encre de marquage pour verre ophtalmique et/ou d'un polymère constituant un liant d'encre de marquage.

14. Procédé selon l'une quelconque des revendications précédentes, **caractérisé en ce que** le revêtement de surface hydrophobe et/ou oléophobe comprend des groupements fluorés.

15. Procédé selon l'une quelconque des revendications précédentes, **caractérisé en ce que** le verre comprend un revêtement anti-reflets sur lequel la couche hydrophobe et/ou oléophobe est déposée.

16. Procédé selon la revendication 15, **caractérisé en ce que** ie revêtement hydrophobe et/ou oléophobe comporte plusieurs couches.

17. Procédé selon l'une quelconque des revendications précédentes, **caractérisé en ce que** la couche protectrice temporaire est éliminée après débordage du verre.

18. Procédé selon la revendications 17, **caractérisé en ce que** la couche protectrice temporaire est éliminée par une solution acide.

19. Procédé selon la revendication 17, **caractérisé en ce que** la couche protectrice temporaire est éliminée par essuyage à sec.

20. Procédé selon la revendication 17, **caractérisé en ce que** la couche protectrice temporaire est éliminée par application d'ultrasons.

21. Procédé selon l'une quelconque des revendications 17 à 20, **caractérisé en ce que** l'élimination de la couche protectrice temporaire est suivie d'une étape de nettoyage par une solution aqueuse de pH sensiblement égal à 7.

22. Procédé selon l'une quelconque des revendications précédentes, dans lequel le dépôt de la couche extérieure hydrophobe et/ou oléophobe sur une première face du verre est précédé par le dépôt d'une ou plusieurs couches minérales ou organiques, **caractérisé en ce qu'**on effectue au moins une étape de traitement par des espèces énergétiques et/ou réactives capables d'attaquer et/ou de modifier chimiquement la surface de la première face du verre avant le dépôt de la (ou des) couche(s) minérale(s) ou organique(s).

23. Procédé selon la revendication 22, **caractérisé en ce que** le verre est retourné pour effectuer un traitement par espèces énergétiques et/ou réactives sur la seconde face de celui-ci avant d'effectuer le dépôt d'une ou plusieurs couches minérales ou organiques et ensuite une couche extérieure hydrophobe et/ou oléophobe.

24. Procédé selon la revendication 23, **caractérisé en ce qu'**une couche temporaire de protection est déposée sur la couche extérieure hydrophobe et/ou oléophobe sur la deuxième face du verre.

## Claims

1. Method for marking one face of an ophthalmic lens of the type including a low surface energy hydrophobic and/or oleophobic outermost layer on a substrate or a high surface energy coating, wherein a mask having a configuration complementary to the required mark is positioned between the face of the lens to be marked and an energizing discharge source adapted to eliminate substantially the outermost layer in order to reveal the substrate or underlying high surface energy coating, which method is **characterized in that** there is deposited onto said outermost layer a temporary protection layer having a surface energy higher than that of the outermost layer and a thickness of less than about 5 nm to enable the discharge to act on the outermost layer through the temporary protection layer.

2. Method according to claim 1, **characterized in that** the thickness of the temporary protection layer is from approximately 2 nm to approximately 4 nm.

3. Method according to claim 1 or claim 2, **characterized in that** the protection layer is a mineral layer.

4. Method according to claim 1 or claim 2, **characterized in that** the protection layer comprises a metal fluoride or a mixture of metal fluorides or a metal oxide or a mixture of metal oxides.

5. Method according to claim 4, **characterized in that** the metal fluoride is MgF₂, LaF₂, AlF₃ or CeF₃.

6. Method according to claim 4, **characterized in that** the oxide is selected from TiO₂, Al₂O₃, ZrO₂ and praseodymium oxide and the mixture of metal oxides is a mixture of alumina and praseodymium oxide.

7. Method according to any one of the preceding claims, **characterized in that** the protection layer is deposited by evaporation.

8. Method according to any one of the preceding claims, **characterized in that** the temporary protection layer is deposited on a region of the face intended to be in contact with a pad for retaining the lens during trimming thereof.

9. Method according to any one of the preceding claims, **characterized in that** the layer has a substantially continuous structure.

10. Method according to any one of the preceding claims, **characterized in that** the protection layer has a discontinuous structure.

11. Method according to any one of the preceding claims, **characterized in that** the protection layer takes the form of a network.

12. Method according to any one of the preceding claims, **characterized in that** the temporary protection layer is polytetrafluoroethylene.

13. Method according to claim 1, **characterized in that** the protection layer comprises a marking ink for ophthalmic lenses and/or a polymer constituting a marking ink binder.

14. Method according to any one of the preceding claims, **characterized in that** the hydrophobic and/or oleophobic surface coating comprises fluorinated groups.

15. Method according to any one of the preceding claims, **characterized in that** the lens comprises an antireflection coating onto which the hydrophobic and/or oleophobic layer is deposited.

16. Method according to claim 15, **characterized in that** the hydrophobic and/or oleophobic coating includes a plurality of layers.

17. Method according to any one of the preceding claims, **characterized in that** the temporary protection layer is eliminated after trimming the lens.

18. Method according to claim 17, **characterized in that** the temporary protection layer is eliminated by an acid solution.

19. Method according to claim 17, **characterized in that** the temporary protection layer is eliminated by dry wiping.

20. Method according to claim 17, **characterized in that** the temporary protection layer is eliminated by application of ultrasound.

21. Method according to any one of claims 17 to 20, **characterized in that** the elimination of the temporary protection layer is followed by a cleaning step using an aqueous solution with a pH substantially equal to 7.

22. Method according to any one of the preceding claims, wherein the deposition of the hydrophobic and/or oleophobic outermost layer on a first face of the lens is preceded by the deposition of one or more mineral or organic layers, **characterized in that** at least one step of treatment by energetic and/or reactive substances capable of attacking and/or chemically modifying the surface of the first face of the lens is effected before the deposition of the mineral or organic layer(s).

23. Method according to claim 22, **characterized in that** the lens is turned over to treat its second face by energetic and/or reactive substances before depositing one or more mineral or organic layers and a hydrophobic and/or oleophobic outermost layer.

24. Method according to claim 23, **characterized in that** a temporary protection layer is deposited on the hydrophobic and/or oleophobic outermost layer on the second face of the lens.

## Patentansprüche

1. Verfahren zum Markieren einer Fläche eines ophthalmischen Glases von der Art, aufweisend eine äußere hydrophobe und/oder oleophobe Schicht mit geringer Oberflächenenergie auf einem Substrat oder einer Beschichtung mit hoher Oberflächenenergie, wobei eine Maske von zur gewünschten Markierung komplementärer Konfiguration, zwischen der Fläche des zu markierenden Glases und einer Energieentladungsquelle positioniert wird, dazu geeignet im Wesentlichen die äußere Schicht zu entfernen, um das darunter befindliche Substrat oder Beschichtung mit hoher Energie offenzulegen, **dadurch gekennzeichnet, dass**
an der äußeren Schicht eine temporäre Schutzschicht mit höherer Oberflächenenergie als die äußere Schicht und mit einer Dicke von weniger als ungefähr 5 nm, aufgebracht wird, um es der Entladung zu ermöglichen, auf die äußere Schicht durch die temporäre Schutzschicht hindurch zu wirken.

2. Verfahren gemäß Anspruch 1, **dadurch gekennzeichnet, dass** die Dicke der temporären Schutzschicht zwischen ungefähr 2 und 4 nm ist.

3. Verfahren gemäß Anspruch 1 oder 2, **dadurch gekennzeichnet, dass** die Schutzschicht eine Mineralschicht ist.

4. Verfahren gemäß Anspruch 1 oder 2, **dadurch gekennzeichnet, dass** die Schutzschicht ein Fluorid oder eine Mischung aus Metallfluoriden oder ein Oxid oder eine Mischung aus Metalloxiden umfasst.

5. Verfahren gemäß Anspruch 4, **dadurch gekennzeichnet, dass** das Metallfluorid MgF₂, LaF₂, AlF₃ oder CeF₃ ist.

6. Verfahren gemäß Anspruch 4, **dadurch gekennzeichnet, dass** das Oxyd aus TiO₂, AL₂O₃, ZrO₂ und einem Praseodymoxid ausgewählt ist und die Mischung aus Metalloxiden eine Mischung aus Aluminium und Praseodymoxid ist.

7. Verfahren gemäß einem der vorangehenden Ansprüche, **dadurch gekennzeichnet, dass** die Schutzschicht durch Verdampfen aufgebracht ist.

8. Verfahren gemäß einem der vorangehenden Ansprüche, **dadurch gekennzeichnet, dass** die temporäre Schutzschicht an einem Bereich der Fläche aufgebracht ist, der dazu bestimmt ist, in Kontakt mit einer Halterung für das Glas während dessen Entgratung bzw. Zuschneidung zu sein.

9. Verfahren gemäß einem der vorangehenden Ansprüche, **dadurch gekennzeichnet, dass** die Schicht eine im Wesentlichen kontinuierliche Struktur aufweist.

10. Verfahren gemäß einem der vorangehenden Ansprüche, **dadurch gekennzeichnet, dass** die Schutzschicht eine diskontinuierliche Struktur aufweist.

11. Verfahren gemäß einem der vorangehenden Ansprüche, **dadurch gekennzeichnet, dass** sich die Schutzschicht in Form eines Rasters darstellt.

12. Verfahren gemäß einem der vorangehenden Ansprüche, **dadurch gekennzeichnet, dass** die temporäre Schutzschicht ein Polytetrafluorethylen ist.

13. Verfahren gemäß Anspruch 1, **dadurch gekennzeichnet, dass** die Schutzschicht aus einer Markierungstinte für ophthalmische Gläser und/oder einem Polymer dargestellt ist, der ein Bindemittel für Markierungstinte darstellt.

14. Verfahren gemäß einem der vorangehenden Ansprüche, **dadurch gekennzeichnet, dass** die Beschichtung der hydrophoben und/oder oleophoben Fläche Fluorgruppen umfasst.

15. Verfahren gemäß einem der vorangehenden Ansprüche, **dadurch gekennzeichnet, dass** das Glas eine Anti-Reflexbeschichtung aufweist, an welcher die hydrophobe und/oder oleophobe Schicht aufgebracht ist.

16. Verfahren gemäß Anspruch 15, **dadurch gekennzeichnet, dass** die hydrophobe und/oder oleophobe Beschichtung mehrere Schichten aufweist.

17. Verfahren gemäß einem der vorangehenden Ansprüche, **dadurch gekennzeichnet, dass** die temporäre Schutzschicht nach dem Entgraten bzw. dem Zuschneiden entfernt wird.

18. Verfahren gemäß Anspruch 17, **dadurch gekennzeichnet, dass** die temporäre Schutzschicht mittels einer saueren Lösung entfernt wird.

19. Verfahren gemäß Anspruch 17, **dadurch gekennzeichnet, dass** die temporäre Schutzschicht mittels Trocken-Wischens entfernt wird.

20. Verfahren gemäß Anspruch 17, **dadurch gekennzeichnet, dass** die temporäre Schutzschicht mittels Anwendung von Ultraschall entfernt wird.

21. Verfahren gemäß einem der Ansprüche 17 bis 20, **dadurch gekennzeichnet, dass** die Entfernung der temporären Schutzschicht von einem Reinigungsschritt mit einer wässrigen Lösung mit einem pH-Wert von im Wesentlichen gleich 7 gefolgt wird.

22. Verfahren gemäß einem der vorangehenden Ansprüche, wobei der Aufbringung der äußeren hydrophoben und/oder oleophoben Schicht an einer ersten Fläche des Glases die Aufbringung von einer oder mehrerer mineralischer oder organischer Schichten vorangeht, **dadurch gekennzeichnet, dass** zumindest ein Behandlungsschritt mit energetischen und/oder reaktiven Arten bzw. Bestandteilen ausgeführt wird, dazu geeignet, die Fläche der erste Seite des Glases vor der Aufbringung der mineralischen oder organischen Schicht(en) chemisch zu modifizieren oder anzugreifen.

23. Verfahren gemäß Anspruch 22, **dadurch gekennzeichnet, dass** das Glase umgedreht wird um eine Behandlung mit energetischen und/oder reaktiven Arten bzw. Bestandteilen an dessen zweiter Seite vorzunehmen bevor die Aufbringung einer oder mehrerer mineralischer oder organischer Schichten und darauf folgend einer äußeren hydrophoben und/oder oleophoben Schicht ausgeführt wird.

24. Verfahren gemäß Anspruch 23, **dadurch gekennzeichnet, dass** eine temporäre Schutzschicht an der äußeren hydrophoben und/oder oleophoben Schicht an der zweiten Seite des Glases aufgebracht ist.
